# EUROPÄISCHE PATENTSCHRIFT

(11) **EP 0 769 400 B1**
(45) Veröffentlichungstag und Bekanntmachung des Hinweises auf die Patenterteilung: **31.05.2000**
(21) Anmeldenummer: 95116393.0
(22) Anmeldetag: 18.10.1995
(51) Int. Cl.: B60J 1/14, F16B 37/04, C03C 27/04

(54) **Ausstellbares Karosseriefenster für Kraftfahrzeuge**
Pivoting body window for motor vehicle
Fenêtre pivotante pour carrosserie de véhicule automobile

(43) Veröffentlichungstag der Anmeldung: 23.04.1997
(73) Patentinhaber: HENNIGES ELASTOMER- UND KUNSTSTOFFTECHNIK GMBH & CO KG, D-31547 Rehburg-Loccum (DE)
(72) Erfinder: Kreye, Bernhard, D-31515 Wunstorf (DE)
(74) Vertreter: Wehser, Wulf, Dipl.-Ing.

(56) Entgegenhaltungen:
- DE-A- 3 332 234
- DE-A- 3 447 271
- US-A- 4 396 221
- US-A- 4 746 695
- US-A- 4 778 702

## Beschreibung

Die Erfindung betrifft ein ausstellbares Karosseriefenster für Kraftfahrzeuge, bei welchem das auszustellende Karosseriefenster aus einer mit der Karosserie fluchtenden Lage zum Zwecke des Öffnens des Fensters in eine Ebene versetzbar ist, die einen Winkel von etwa 4° mit der Karosseriefläche einschließt, wobei eine mit dem Karosseriefenster verbindbare Trägerplatte vorgesehen ist, die einen an die Trägerplatte anschließenden Verbindungszapfen aufweist, und wobei die Trägerplatte mit einem Kleber besonders guter Haftung gegenüber Glas auf das Karosseriefenster aufgeklebt ist.

Bei bekannten ausstellbaren Karosseriefenstern dieser Art wird die Trägerplatte oder -scheibe mit der Karosseriefensterscheibe durch Bohrungen in dem Karosseriefenster verbunden, wobei wenigstens ein Zapfen vorgesehen ist, der an die Trägerplatte anschließt und entweder die Bohrung durchgreift oder durch die Bohrung durchgreifende Schrauben festgelegt ist. Nachteilig bei dieser bekannten Anordnung ist es, daß die Erzeugung solcher Bohrungen im Glas der Fensterscheibe einen aufwendigen und teuren Arbeitsgang bedeuten, wobei außerdem auf der Außenseite der Karosserie eine Abdeckklappe für das die Karosseriefensterscheibe durchgreifende Bohrungsloch vorgesehen sein muß, was ebenfalls aufwendig, teuer und unansehnlich ist. Außerdem kann aufgrund der Kapillarwirkung zwischen dem die Bohrung durchgreifenden Teil und der Innenfläche der Bohrung mit Wasser in das Fahrzeug eintreten.

Ein gattungsgemäßes Karosseriefenster ist bereits in der US-A-4396221 vorgeschlagen worden.

Der Erfindung liegt daher die Aufgabe zugrunde, einerseits für eine feste und sichere Verbindung zwischen der Fensterscheibe und einem Ausstellelement Sorge zu tragen und andererseits das Fenster so auszugestalten, daß das Eindringen von Feuchtigkeit, Schmutz oder dergleichen mit Sicherheit verhindert ist. Außerdem soll sich die erfindungsgemäße Fensterscheibe und ihr Ausstellelement leicht herstellen und anbringen lassen, und damit kostengünstig sein.

Diese Aufgabe wird erfindungsgemäß dadurch gelöst, daß der Kleber Polyurethan ist, daß die Trägerplatte ununterbrochen sowohl auf der dem Karosseriefenster abgewandten Seite als auch auf der gegenüberliegenden Seite von einer Polyurethanschicht abgedeckt ist und daß die Trägerplatte sich durch ihre Plattenstärke hindurch erstreckende Öffnungen aufweist.

Mit dieser Anordnung wird erreicht, daß eine überdurchschnittlich gute Verbindung zwischen der Trägerplatte und dem Karosseriefenster erreicht wird, wobei das Karosseriefenster im Bereich der Aufklebung keinerlei Bearbeitungen unterliegt, so daß die obengenannten Nachteile nicht auftreten können.

Die Fixierung der Trägerplatte ist weiter dadurch erhöht und verbessert, daß sie sich durch ihre Plattenstärke hindurch erstreckende Öffnungen aufweist, so daß die so gefüllten Öffnungen während des Einbringungsvorganges des Polyurethan ausgefüllt werden, was zu erheblichen Festigkeitssteigerungen einer solchen Verbindung führt.

Besonders vorteilhaft ist es, wenn die Trägerplatte während des Aushärtungs- bzw. Verklebungsvorganges mittels Polyurethan in einem Abstand zur Glasfläche des Karosseriefensters angeordnet ist, der hierdurch ebenfalls mit Polyurethan gefüllt und damit vermieden wird, daß die Klebefläche unterbrochen wird. Damit wird ein Höchstmaß an Festigkeit dieser Verbindung erreicht.

Bei dem Ausstellelement kann es sich in an sich bekannter Weise um ein Knickelement, aber auch um ein Teleskopelement oder dergleichen handeln, wobei durch diese Mechanismen das ausstellbare Karosseriefenster mehr oder weniger weit von der Oberfläche der Karosserie im Öffnungszustand entfernbar ist.

Der das Ausstellelement tragende Verbindungszapfen kann vorzugsweise mit einem Innengewinde versehen sein, in welches sein Anschlußkörper des Ausstellelementes eingreift.

Die Erfindung wird im folgenden anhand von Ausführungsbeispielen in der Zeichnung näher erläutert.
- Fig. 1: zeigt in perspektivischer Darstellung einen Abschnitt einer Karosseriefensterscheibe, der in eine Parallelebene zur hier nicht dargestellten Fahrzeugkarosserie bewegbar ist,
- Fig. 2: ist eine Darstellung ähnlich Fig. 1 mit Trägerplatte, die vollständig von Polyurethan umschlossen ist,
- Fig. 3: zeigt im Schnitt die Trägerplatte nach Fig. 1,
- Fig. 4: zeigt im Schnitt die Trägerplatte nach Fig. 2,
- Fig. 5: ist die Draufsicht III-III bzw. der entsprechende Schnitt nach Fig. 3 und
- Fig. 6: zeigt im vergrößerten Maßstab die Anordnung nach Fig. 4.

Auf der Fläche la der Karosseriefensterscheibe 1 ist mittels eines Polyurethanklebers eine Trägerplatte 2 mit Öffnungen 3 aufgeklebt, welche einen Verbindungszapfen 4 aufweist, der mit einem Innengewinde 5 versehen ist. An diesen Verbindungszapfen 4 kann über das Innengewinde 5 ein Anschlußkörper eines Ausstellelementes angeschlossen werden.

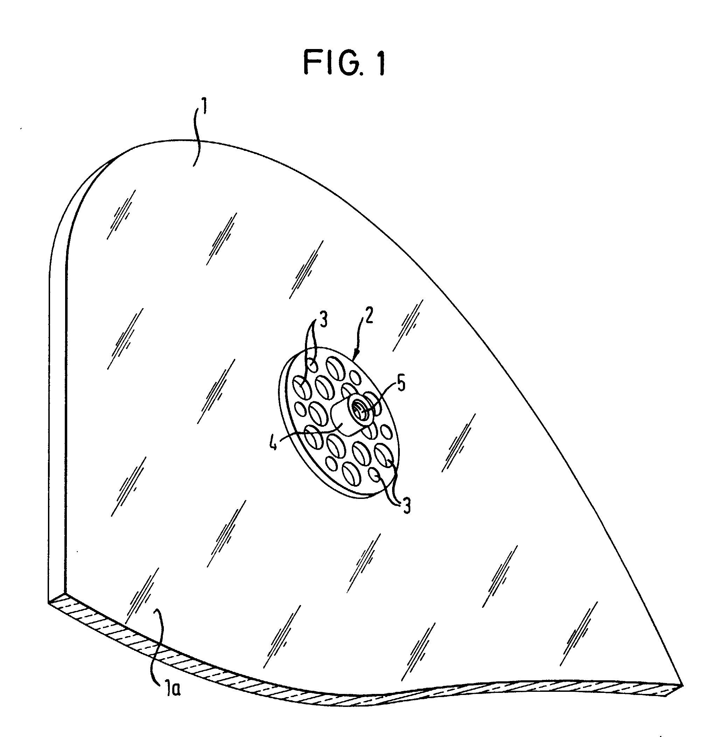

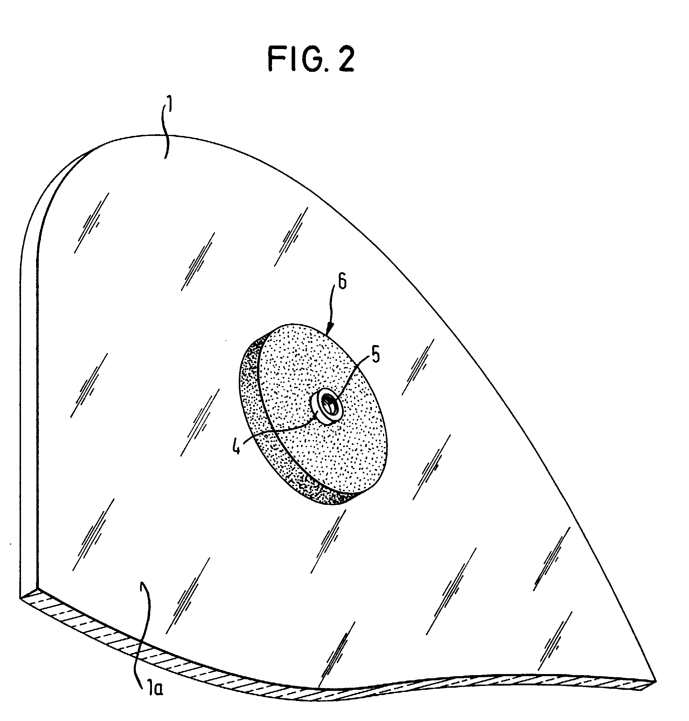

Fig. 2 ist eine Darstellung ähnlich Fig. 1, bei welcher die Trägerplatte 2 (vgl. Fig. 1) gänzlich von Polyurethan umhüllt ist und somit eine nach außen völlig geschlossenen Scheibe 6 bildet. Bei der Ausführungsform nach Fig. 2 ist also die Trägerplatte 2 nach außen nicht zugänglich.

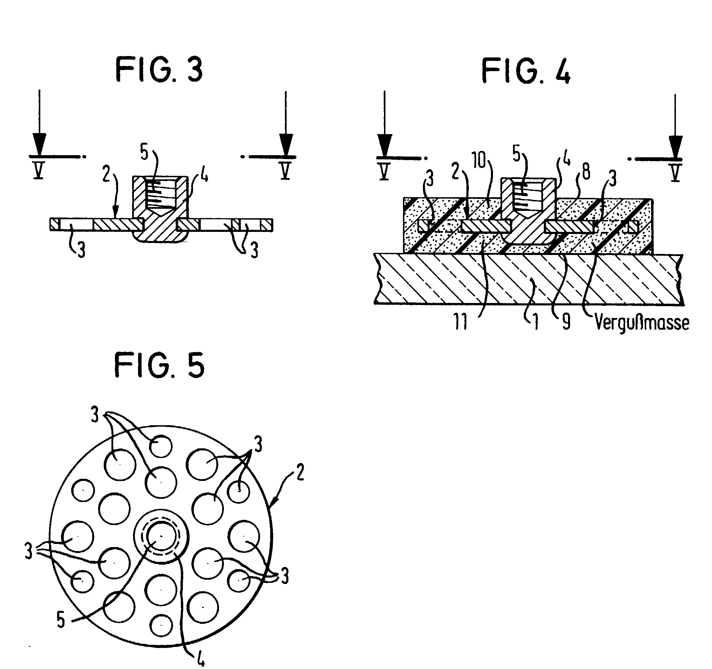

Fig. 4 zeigt im Schnitt die Verklebung der Polyurethanschicht mit der Kraftfahrzeugfensterscheibe, wobei die Trägerplatte 2 ununterbrochen sowohl auf der der Kraftfahrzeugfensterscheibe 1 abgewandten Seite 8 als auch auf der gegenüberliegenden Seite 9 von der Polyurethanschicht 10 und 11 abgedeckt ist. Die Polyurethanschicht ist in der Zeichnung außerdem als "Vergußmasse" bezeichnet.

Fig. 5 ist ein Schnitt V/V nach Fig. 3 bzw. nach Fig. 4 und läßt eine mögliche Anordnung der Öffnungen 3 sowie deren Aufteilung erkennen.

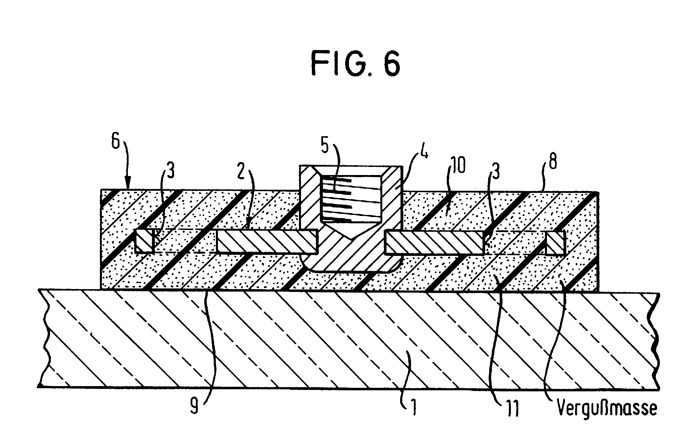

Die oben geschilderten Verhältnisse ergeben sich aus dem größeren Maßstab nach Fig. 6.

## Patentansprüche

1. Ausstellbares Karosseriefenster (1) für Kraftfahrzeuge, bei welchem das auszustellende Karosseriefenster (1) aus einer mit der Karosserie fluchtenden Lage zum Zwecke des Öffnens des Karosseriefensters (1) in eine Ebene versetzbar ist, die einen Winkel von etwa 4° mit der Karosseriefläche einschließt, wobei eine mit dem Karosseriefenster (1) verbindbare Trägerplatte (2) vorgesehen ist, die einen an die Trägerplatte (2) anschließenden Verbindungszapfen (4) aufweist, und wobei die Trägerplatte (2) mit einem Kleber besonders guter Haftung gegenüber Glas auf das Karosseriefenster (1) aufgeklebt ist,
**dadurch gekennzeichnet ,**
daß der Kleber Polyurethan ist, daß die Trägerplatte (2) ununterbrochen sowohl auf der dem Karosseriefenster (1) abgewandten Seite (8) als auch auf der gegenüberliegenden Seite(9) von einer Polyurethanschicht (10, 11) abgedeckt ist und
daß die Trägerplatte (2) sich durch ihre Plattenstärke hindurch erstreckende Öffnungen (3) aufweist.

2. Karosseriefenster nach Anspruch 1, dadurch gekennzeichnet, daß die Trägerplatte (2) während des Aushärtungs- bzw. Verklebungsvorganges mittels Polyurethan in einem Abstand zur Glasfläche (8) des Karosseriefensters angeordnet ist.

3. Karosseriefenster nach einem der vorhergehenden Ansprüche, dadurch gekennzeichnet, daß ein Ausstellelement vorgesehen ist, das in an sich bekannter Weise ein Knickelement oder ein Teleskopelement ist.

4. Karosseriefenster nach einem der vorhergehenden Ansprüche, dadurch gekennzeichnet, daß der das Ausstellelement tragende Verbindungszapfen (4) mit einem Innengewinde (5) versehen ist, in welches ein Anschlußkörper des Ausstellelementes eingreift.

## Claims

1. A push-open bodywork window (1) for motor vehicles, in which, in order to open the bodywork window (1), the bodywork window (1) to be pushed open is movable from a position in alignment with the bodywork into a plane which forms an angle of approximately 4° with the bodywork surface, wherein a support plate (2) connectable to the bodywork window (1) is provided which has a connecting pin (4) adjoining the support plate (2), and wherein the support plate (2) is attached to the bodywork window (1) by an adhesive with particularly good adhesion to glass, **characterized in that**
the adhesive is polyurethane, the support plate (2) is covered in a continuous manner by a polyurethane layer (10, 11) both on the side (8) remote from the bodywork window (1) and on the opposite side (9), and
the support plate (2) is provided with openings (3) extending through its thickness.

2. A bodywork window according to Claim 1, **characterized in that** the support plate (2) is arranged at a distance from the glass surface (8) of the bodywork window during the setting or adhesion procedure by means of polyurethane.

3. A bodywork window according to one of the preceding Claims, **characterized in that** a push-open element is provided which is a bending or a telescoping element in a manner known *per se.*

4. A bodywork window according to one of the preceding Claims, **characterized in that** the connecting pin (4) carrying the push-open element is provided with an internal thread (5) into which an attachment body of the push-open element engages.

## Revendications

1. Fenêtre de carrosserie (1) orientable pour véhicules automobiles, dans laquelle la fenêtre de carrosserie (1) à orienter peut être déplacée à partir d'une position en alignement avec la carrosserie, en vue de l'ouverture de la fenêtre de carrosserie (1), dans un plan qui forme un angle d'environ 4° avec la surface de la carrosserie, une plaque de support (2) étant prévue qui peut être reliée à la fenêtre de carrosserie (1) et qui présente un axe de liaison (4) se raccordant à la plaque de support (2), et la plaque de support (2) étant collée sur la fenêtre de carrosserie (1) au moyen d'une colle qui adhère particulièrement bien au verre, caractérisée en ce que la colle est du polyuréthanne, en ce que la plaque de support (2) est recouverte de manière ininterrompue par une couche de polyuréthanne (10, 11) aussi bien sur le côté (8) tourné à l'opposé de la fenêtre de carrosserie, que sur le côté (9) opposé et en ce que la plaque de support (2) présente des ouvertures (3) qui s'étendent à travers son épaisseur.

2. Fenêtre de carrosserie selon la revendication 1, caractérisée en ce que pendant l'opération de durcissement ou de collage au moyen de polyuréthanne, la plaque de support (2) est disposée à distance de la surface de verre (8) de la fenêtre de carrosserie.

3. Fenêtre de carrosserie selon l'une des revendications précédentes, caractérisée en ce qu'il est prévu un élément de projection qui, de manière connue en soi, est un élément pliant ou un élément télescopique.

4. Fenêtre de carrosserie selon l'une des revendications précédentes, caractérisée en ce que l'axe de liaison (4) qui porte l'élément de projection est pourvu d'un taraudage (5) dans lequel s'engage un corps de jonction de l'élément de projection.
